# EUROPEAN PATENT APPLICATION

(11) **EP 4 822 162 A1**
(43) Date of publication of application: **14.10.2026**
(21) Application number: 26157179.8
(22) Date of filing: 09.02.2026
(51) Int. Cl.: F02C 9/28

(54) **TRANSIENT ENGINE LIMITING**

(30) Priority: 09.04.2025 US 202519174509
(71) Applicant: Lockheed Martin Corporation, Bethesda, Maryland 20817 (US)
(72) Inventor: Kubik, Stephen T., Newtown, Connecticut, 06470 (US); Leone, Adam A., Newtown, Connecticut, 06470 (US); Miller, Jason Ray, Plainville, Connecticut, 06062 (US)
(74) Representative: Schmitt-Nilson Schraud Waibel Wohlfrom Patentanwälte Partnerschaft mbB

(57) **Abstract**

Transient engine limiting is provided. An aerial vehicle can include a turboshaft engine and a controller. The controller can receive a continuous engine limit for the turboshaft engine. The controller can receive a transient engine limit for the turboshaft engine. The controller can generate, using the continuous engine limit and the transient engine limit, a target operating state greater than the continuous engine limit and less than the transient engine limit. The controller can generate control signals to operate the turboshaft engine at the target operating state.

## Description

This invention was made with government support under HR0011-15-9-0004 and HR0011-17-9-0004 awarded by the Defense Advanced Research Projects Agency. The government has certain rights in the invention.

This disclosure relates to aerial vehicles. For example, the aerial vehicles can include transient limits for various operating states.

Aerial vehicles can include operating limits for various operating states. In some cases, relaxed operating limits may be provided for limited temporal durations.

Operating limits for aerial vehicle engines, such as a torque, turbine gas temperature (TGT), or gas generator speeds (NG), can include continuous limits as well as transient limits. Continuous limits can refer to steady state operations of an aerial vehicle (sometimes referred to as nominal or continuous operation). Transient limits can refer to time-duration limited values. Such time-limited values can correspond to increased power demand during transient events. Transient events can include dynamic loads associated with various flight maneuvers of the aerial vehicle. For example, an oscillatory or other movement of a slung load can exert a positive dynamic load upon the aerial vehicle when the slung load's motion aligns with the vehicle's acceleration or turning forces, increasing the effective stress on the engines. Conversely, the slung load can exert a negative dynamic load upon the aerial vehicle when the slung load's motion opposes the vehicle's acceleration or turning forces, decreasing the effective stress on the engines. Further, transient limits can provide increased power for climbing or high speed pitching or rolling maneuvers, as may be useful during emergency or other demanding aerial maneuvers. However, transitioning between the continuous and transient limits can prove challenging, especially when combined with other aspects of an autonomous flight control system. For example, adjusting operating limits upon an expiration of a time-duration can result in abrupt changes to a flight pattern, while other approaches may prematurely limit torque, power, temperature, or other aspects of a performance envelope.

An aspect of the present disclosure can relate to an aerial vehicle. The aerial vehicle can include a turboshaft engine and a controller. The controller can receive a continuous engine limit for the turboshaft engine. The controller can receive a transient engine limit for the turboshaft engine. The controller can generate, using the continuous engine limit and the transient engine limit, a target operating state greater than the continuous engine limit and less than the transient engine limit. The controller can generate control signals to operate the turboshaft engine at the target operating state.

According to the present disclosure, in some implementations, the continuous engine limit includes a limit for one or more of a shaft output torque, a turbine gas generator temperature (TGT), or a gas generator speed (NG). In some implementations, the controller is configured to receive an additional transient engine limit having a different transient duration than the transient engine limit and select one of the transient engine limit or the additional transient engine limit based on a time elapsed since exceeding the continuous engine limit, wherein the control signals are generated based on the selected one of the transient engine limit or the additional transient engine limit. In some implementations, the controller is configured to rate-limit an adjustment to the target operating state based on a remaining time associated with the transient engine limit. In some implementations, the controller is configured to receive a commanded operating state exceeding the target operating state, wherein the control signals to operate the turboshaft engine are generated responsive to the receipt of the commanded operating state. In some implementations, the commanded operating state is received from an autonomous flight control system of the aerial vehicle.

In some implementations, the controller is configured to present, via a cockpit display the commanded operating state relative to the target operating state and the continuous engine limit, wherein the commanded operating state exceeds the target operating state. In some implementations, the controller is configured to present, via a cockpit display an indication of a current operating state relative to the continuous engine limit and the transient engine limit; and an indication of a remaining time for the transient engine limit. The indication can include a presentation the indication of the current operating state with increased prominence responsive to the current operating state exceeding the continuous engine limit. In some implementations, the aerial vehicle is configured to detect a slung load and select the transient engine limit based on the detected slung load.

An aspect of the present disclosure can relate to a method. The method can include receiving, by a controller, a continuous engine limit for an aerial vehicle. The method can include receiving, by the controller, a transient engine limit for the aerial vehicle. The method can include generating, by the controller using the continuous engine limit and the transient engine limit, a target operating state greater than the continuous engine limit and less than the transient engine limit. The method can include generating, by the controller, control signals to operate the aerial vehicle at the target operating state. In some implementations, the continuous engine limit includes a shaft output torque for a turboshaft engine of the aerial vehicle. In some implementations, the continuous engine limit includes a limit for any of a turbine gas generator temperature (TGT) or a gas generator speed (NG). In some implementations, a time for the transient engine limit exceeds a positive dynamic load for a flight maneuver of the aerial vehicle. For example, the positive dynamic load can correspond to a motion of a slung load coupled with the aerial vehicle.

In some implementations, the method includes receiving, by the controller, an additional transient engine limit having a different transient duration than the transient engine limit. The method can include selecting, by the controller, one of the transient engine limit or the additional transient engine limit based on a time elapsed since exceeding the continuous engine limit. The control signals can be generated based on the selected one of the transient engine limit or the additional transient engine limit. In some implementations, the method includes rate-limiting, by the controller, an adjustment to the target operating state based on a remaining time associated with the transient engine limit. In some implementations, the method includes receiving, by the controller, a commanded operating state exceeding the target operating state, wherein the control signals are generated responsive to the receipt of the commanded operating state. The method can include presenting, by the controller via a cockpit display, the commanded operating state relative to the target operating state and the continuous engine limit, wherein the commanded operating state exceeds the target operating state.

An aspect of the present disclosure can relate to a non-transitory computer readable media. The media can include instructions stored thereon that, when executed by a controller, causes the controller to: receive a continuous engine limit an engine of an aerial vehicle; receive a transient engine limit for the engine; generate, using the continuous engine limit and the transient engine limit, a target operating state greater than the continuous engine limit and less than the transient engine limit; and generate control signals to operate the engine at the target operating state.

In some implementations, the continuous engine limit and the transient engine limit include a plurality of components, the plurality of components including shaft output torque for the engine, wherein the engine is a turboshaft engine; a turbine gas generator temperature for the turboshaft engine; and a gas generator speed (NG) for the turboshaft engine. In some implementations, the instructions include instructions to: receive an additional transient engine limit having a different transient duration than the transient engine limit; select one of the transient engine limit or the additional transient engine limit based on a time elapsed since exceeding the continuous engine limit, wherein the control signals are generated based on the selected one of the transient engine limit or the additional transient engine limit; and rate-limit an adjustment to the target operating state based on a remaining time associated with the transient engine limit. In some implementations, the instructions include instructions to present, via a cockpit display: a commanded operating state relative to the target operating state and the continuous engine limit, wherein the commanded operating state exceeds the target operating state; an indication of a current operating state relative to the continuous engine limit and the transient engine limit; and an indication of a remaining time for the transient engine limit.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. Aspects can be combined and it will be readily appreciated that features described in the context of one aspect of the invention can be combined with other aspects. Aspects can be implemented in any convenient form. For example, by appropriate computer programs, which can be carried on appropriate carrier media (computer readable media), which can be tangible carrier media (e.g. disks or other non-transitory storage media) or intangible carrier media (e.g. communication signals). Aspects can also be implemented using suitable apparatus, which can take the form of programmable computers running computer programs arranged to implement the aspects. As used in the specification and in the claims, the singular form of "a," "an," and "the" include plural referents unless the context clearly dictates otherwise.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing. In the drawings:
FIG. 1 illustrates a block diagram of an example data processing system, in accordance with one or more implementations;
FIG. 2 illustrates an example of continuous and transient limits for an aerial vehicle, in accordance with one or more implementations;
FIG. 3 illustrates another example of continuous and transient limits for an aerial vehicle, in accordance with one or more implementations;
FIG. 4 illustrates further continuous and transient limits for an aerial vehicle, in accordance with one or more implementations;
FIG. 5 illustrates a block diagram of a control system to implement continuous and transient limits, in accordance with one or more implementations;
FIG. 6 illustrates a block diagram for a method of operating an aerial vehicle in excess of a continuous limit, in accordance with one or more implementations;
FIG. 7 illustrates a graphical user interface to indicate dynamic margin available for a limit of an aerial vehicle, in accordance with one or more implementations; and
FIG. 8 illustrates a block diagram of an example computer system useful in implementing one or more components detailed herein.

In the following detailed description, reference is made to the accompanying drawings, which form a part hereof. In the drawings, similar symbols typically identify similar components, unless context indicates otherwise. The illustrative implementations described in the detailed description, drawings, and claims are not meant to be limiting. Other implementations can be utilized, and other changes can be made, without departing from the spirit or scope of the subject matter presented. It will be readily understood that the aspects of the present disclosure, as generally described herein, and illustrated in the figures, can be arranged, substituted, combined, and designed in a wide variety of different configurations, all of which are explicitly contemplated and make part of this disclosure.

Aerial vehicles, including helicopters, can include various design limits, such as limits for engines or control surfaces. For example, helicopters can include engine limits for shaft output torque, turbine gas generator temperature (TGT), or gas generator speed (NG). These limits can include a continuous limit, and one or more transient limits (e.g., a thirty-second limit, a thirtyminute limit, or so forth). Human pilots sometimes exceed continuous limits (and in some cases, transient limits). For example, while carrying a slung load, forces exerted by the slung load can briefly exceed a continuous limit, even where an average value is within the continuous limit. However, it may be challenging to manage excursions approaching the end of transient limits. Abrupt reductions in available performance can render it difficult to pilot the aerial vehicle. Conversely, overly slewed control designs can avoid abrupt performant changes, but may unduly restrict the use of transient limits, as may prove useful for certain mission sets, such as those including slung loads or at-limit performance.

Uncrewed systems frequently operate at-limit. However, it may be challenging to manage excursions beyond continuous limits. Accordingly, such aerial vehicles sometimes inhibit operation beyond continuous limits, or risk exceeding design limits. According to the present disclosure, control systems are provided, as may manage the use of transient engine limits. The present control systems can interface with crewed aerial vehicles or autonomous systems, including un-crewed aerial vehicles. For example, the present control systems can interface with an autonomy system to manage excursions beyond nominal operation, and a return to nominal operation at or in advance of an expiration of a duration associated with one or more transient limits. Application of such techniques can improve the use of an available performance envelope including transient limits, relative to other approaches.

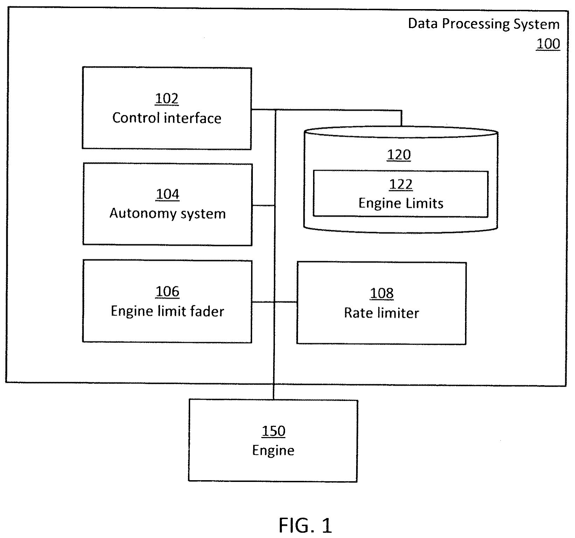

Referring now to FIG. 1, a block diagram of an example data processing system 100 is provided in accordance with one or more implementations. The data processing system 100 can include a control interface 102 for an aerial vehicle. The control interface 102 can include flight controls for a pilot (e.g., cyclic and collective control sticks or anti-torque pedals) or provide an operative connection with an autonomy system 104. The data processing system 100 can include the autonomy system 104, as may be configured to navigate an aerial vehicle. The data processing system 100 can include at least one engine limit fader 106 configured to generate a target state based on a continuous engine limit and a transient engine limit. The data processing system 100 can include at least one rate limiter 108 to limit a rate of adjustment of the target state. The data processing system 100 can include at least one data repository 120. The depicted components should not be construed as limiting; for example, the data processing system 100 can include or interface with further instances of data processing systems such as, ship-based and ground-based control systems.

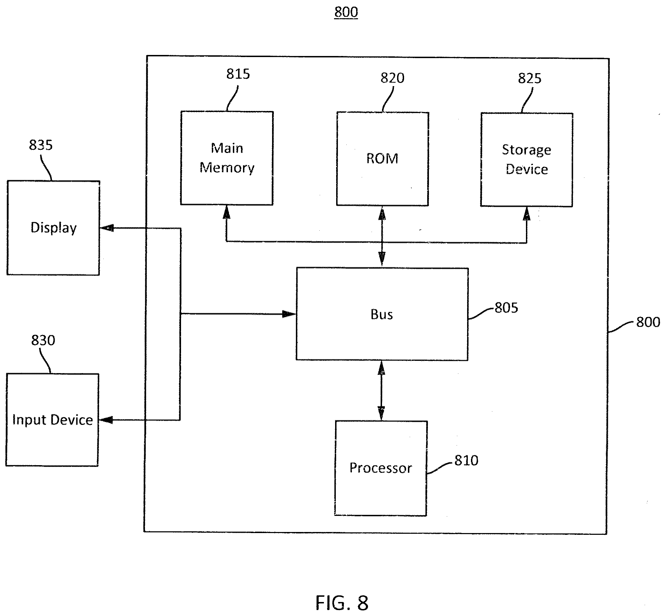

The control interface 102, autonomy system 104, engine limit fader 106, or rate limiter 108 can each include one processing unit or other logic device of a controller such as programmable logic array engine, or module configured to communicate with the data repository 120 or database. The control interface 102, autonomy system 104, engine limit fader 106, or rate limiter 108 can be separate components, a single component, or part of the data processing system 100. The data processing system 100 can include hardware elements, such as one or more processors, logic devices, or circuits of a controller. For example, the data processing system 100 can include one or more components, structures or functionality of a computing device depicted in FIG. 8. Such components may sometimes be referred to as a controller, processor, or processing circuitry.

The data repository 120 can include one or more local or distributed databases, and can include a database management system. The data repository 120 can include computer data storage or memory and can store one or more data elements for engine limits 122.

The engine limits 122 can refer to or include continuous engine limits 122, as may be maintained for many minutes or hours, for at least some aerial vehicle. The engine limits 122 can refer to or include transient engine limits 122, as may be more time limited. For example, transient engine limits 122 may be provided for a duration of, for example, twelve seconds, thirty minutes, or so on. The continuous engine limits 122 and transient engine limits 122 are intended to refer to times during an operational use of an aerial vehicle. For example, a transient engine limit 122 can extend for a duration at or proximal to a turning apex during an aerobatic maneuver, while a continuous engine limit 122 can apply to a longer duration, such as an entirety of a flight path. However, particular durations for continuous engine limits 122 and transient engine limits 122 may be somewhat longer for endurance aerial vehicle, and shorter for other uses. Moreover, some relatively long duration engine limits 122, such as durations of hours, may be referred to as continuous engine limits 122 to distinguish from shorter term engine limits 122, which may be more aligned to a duration of a pendulation of a slung load.

Transient engine limits 122 can exceed continuous engine limits 122 without exceeding overall design limits for various engine components. For example, a rotor-aircraft can include engine limits 122 for shaft output torque, a turbine gas generator temperature (TGT), or a gas generator speed (NG). Transient engine limits 122 may be provided as discrete units, or with reference to a continuous engine limit 122. For example, a transient engine limit 122 can be provided in units of kilonewton meters (kNm), degrees Celsius (°C), or kilowatts (kW), or as 105% of a continuous engine limit 122, 110% of a continuous engine limit 122, or so forth.

In some cases, multiple transient engine limits 122 are provided for a same parameter having a continuous engine limit 122. For example, a first transient engine limit 122 (e.g., 110%) can be provided for a first duration, a second transient engine limit 122 (e.g., 105%) can be provided for a second duration, extending beyond the first duration. A third transient engine limit 122 may be provided for a third duration, and so forth (e.g., another transient engine limit 122 can be provided as exceeding the first transient engine limit 122 for a duration less than the first duration or as exceeding the second duration for a transient engine limit 122 less than the second transient engine limit 122). Time durations for various engine limits 122 can be defined separately from one another. For example, a duration or relative quantity can vary between separate engine limits 122 as may be applied to various aspects of an engine (e.g., torque, TGT, or NG).

The engine limits 122 can be greater or than or less than a commanded operating state, as is received or determined based on controls received from the control interface 102. For example, the commanded operating state can refer to an operating state as commanded by a pilot, via flight controls, or commanded via an autonomy system 104 (e.g., an autonomous flight control system). Where the commanded operating state is less than a continuous engine limit 122, the data processing system 100 can generate control signals to generate the commanded state. Where the commanded operating state exceeds the continuous engine limit 122, the data processing system 100 (e.g., the engine limit fader 106 and the rate limiter 108) can determine a target operating state greater than the continuous engine limit 122 and less than the transient engine limit 122. If the commanded operating state persists longer than a duration of the transient engine limit 122, the data processing system 100 can fade the target operating state to the continuous engine limit 122 without exceeding a time duration for the transit engine limit 122.

The data processing system 100 can include at least one control interface 102 designed, constructed, or operational to interface with a source for commanded operating state. For example, the control interface 102 can include flight controls to interface with a human pilot, and a display (e.g., visual, audible, audiovisual, haptic, or other cockpit display) configured to present information to the human pilot. The commanded operating state can refer to at least one flight control input (e.g., cyclic and collective control sticks or anti-torque pedals), as well as various applications of further transforms, control laws, or so forth. Some control interfaces 102 are provided as an operative connection with at least one autonomy system 104 of the data processing system 100. For example, the control interfaces 102 can include selectable controls, as may be actuated by a vehicle pilot interior to, or remote from, the aerial vehicle. For example, to interface with autonomy systems 104, a control interface 102 can include a data link to receive commanded operating states.

The autonomy system 104 can be designed, constructed, or operational to receive an indication of a destination, route, or other mission objective, and generate commanded operating states to complete the objective. For example, some autonomy systems 104 are implemented as flight envelope protection systems, such as stability augmentation systems. Some autonomy systems 104 are implemented as high level autonomy systems 104, such as full-authority flight control systems which may, in some cases, replace a human pilot during at least some operational conditions. A human pilot, an autonomy system 104, or a human pilot in combination with an autonomy system 104 can generate commanded operating states as may be provided to other components of the data processing system 100, such as the engine limit fader 106 or the rate limiter 108. For example, a human pilot or a planning portion of an autonomy system 104 can generate a turn command, as may be modified (e.g., limited) by a flight control limiter of the autonomy system 104.

The data processing system 100 can include or interface with at least one engine limit fader 106 designed, constructed, or operational to fade between one or more engine limits 122 to generate a target operating state. For a commanded operating state which exceeds an engine limit 122, the engine limit fader 106 can generate a target operating state exceeding the engine limit 122, but which does not exceed another transient engine limit 122, and fades to the lower engine limit 122 over time. For example, the engine limit fader 106 can fade between a transient engine limit 122 and a continuous engine limit 122, or between a first transient engine limit 122 and a second transient engine limit 122. The engine limit fader 106 operates based on a time for one or more transient engine limits. For example, to adjust from a transient engine limit 122 to a continuous limit 122, the engine limit fader 106 can complete a fade prior to an expiration of a duration for the transient engine limit 122 to avoid exceeding design limits.

The engine limit fader 106 can further operate based on a receipt of engine data. For example, for an aerial vehicle with a pendulating slung load, the engine limit fader 106 can update operation based on a portion of the pendulation which does not exceed a continuous engine limit 122. Such management can be achieved via a momentary reset mechanism, or by increasing a portion of the transient limit based on (e.g., proportional to) a time during which the parameter does not exceed the continuous engine limit 122. For example, the data processing system can determine an integral of the amount by which the parameter does not exceed the continuous engine limit 122 over the time to determine a recovery of the transient limit, to prevent near-continuous operation within beyond the continuous engine limit 122.

The data processing system 100 can include at least one rate limiter 108 designed, constructed, or operational to limit a rate of change to the target operating state. For example, the rate limiter 108 can be implemented as a low pass filter to slew any changes to the target operating state, as may improve dynamic motion of an aerial vehicle. The combination of the limit fader 106 and the rate limiter 108 can be configured to prevent an aerial vehicle from exceeding a transient engine limit 122 when exceeding continuous limits, while permitting excursions beyond nominal continuous engine limits for durations which may exceed other approaches. Moreover, the control method of the present disclosure can be applied to human piloted or autonomous systems, as may improve aerial vehicle function during operations that exceed continuous engine limits, such as ferrying slung loads. The data processing system 100 can generate an output of a limit according to various controls, as may vary according to a particular aerial vehicle. According to a position of the aerial vehicle (or according to varying implementations of the present disclosure), the data processing system 100 can limit motion in one, some, or all of a pitch axis, roll axis, or yaw axis. For example, some helicopters can limit engine output according to a modulation of a collective control to adjust a pitch of a main or other rotor. In some instances, the data processing system 100 can apply the limit according to a position of the aerial vehicle. For example, the data processing system 100 can reduce a lateral speed to avoid reductions in altitude when operating near a surface, such as during nape of earth flight. Further operations of the data processing system 100 can modulate inputs related to any of the various axes, including inter-related combinations of the axes. For example, operation in a pitch axis can slow the aircraft down, to aid in the recovery of lost altitude from collective limiting in the vertical axis.

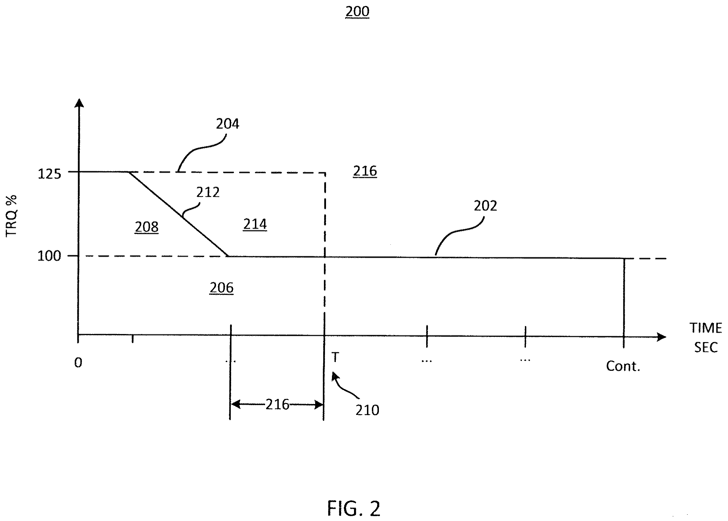

Referring to FIG. 2, an example of a continuous limit 202 and a transient limit 204 for an aerial vehicle is provided in accordance with one or more implementations. More particularly, the present limits are provided for shaft output torque for an aerial vehicle such as a helicopter (but the aspects of the present figure can apply to various further parameters of aerial vehicles). A first operational envelope 206 corresponds to the continuous limit 202, such that operation in the first operational envelope 206 is not time limited. A second operational envelope 208 corresponds to the transient limit 204, such that operation in the second operational envelope 208 is time limited to within a corresponding duration, depicted as terminating at a first time 210. The second operational envelope 208 is defined according to (e.g., terminates at) a transition 212 from a transient engine limit (depicted as 125% of nominal) to a continuous engine limit 122 (depicted as 100% of nominal). The transition 212 is depicted as a linear transition 212, for ease of depiction, but can be substituted for various further curves according to selected control values.

The linear or other slope of the transition 212 is determined according to the limit fader 106, along with the rate limiter 108. The limit fader 106 can include a parameter of a time to begin fading from one engine limit 122 to another (e.g., from the transient limit 204 to the continuous limit 202). For example, as depicted, the limit fader 106 can maintain the transient limit 204 for a period of time before initiating the transition 212. In the depicted example of FIG. 2, the period of time is depicted as nonzero. However, in some implementations, the limit fader 106 can begin the transition earlier or later (e.g., the transition can begin immediately upon detection of an operating state exceeding the continuous engine limit 202 or upon reaching the transient engine limit 204). Such a period of time can be predefined or based on a deviation of a current operating state from the continuous limit 202. For example, where a current operating state of the second operational envelope 208 only slightly exceeds the continuous limit 202, the limit fader 106 can initiate the transition 212 somewhat later than for a current operating state which exceeds the continuous limit 202 by a greater degree. The slope of the transition 212 can further depend on the rate limiter 108, at least where an output of the limit fader 106 would exceed a rate limit, absent an activation of the rate limiter.

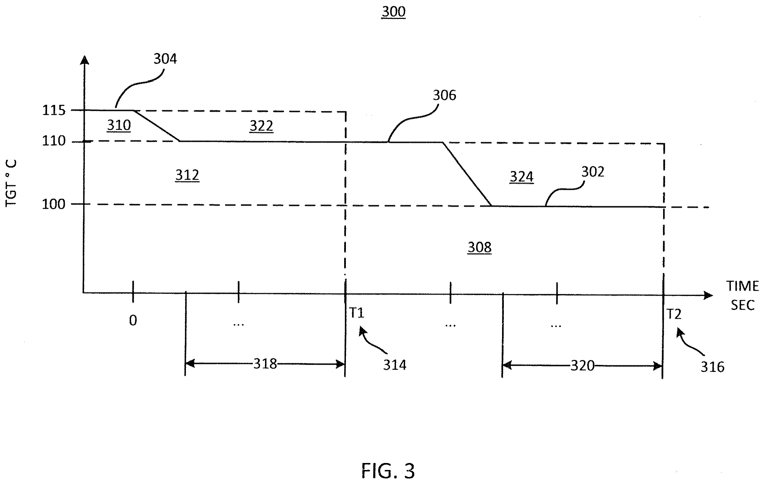

The first time 210 can define a design limit for an aerial vehicle (e.g., an engine limit 122, such as the depicted example of the shaft output torque). A non-operating envelope 214 is depicted to the right of the transition 212. The non-operating envelope 214 extends between the second operational envelope 208 and the first time 210. Accordingly, the non-operating envelope 214 can represent available margin, such that right shifting or increasing a slope of the transition 212 can reduce an area of the non-operating envelope 214. Such a reduction in area can correspond to increased performance envelope for the aerial vehicle. One the other hand, right shifting or steepening the slope can reduce margin for the data processing system 100 (e.g., the limit fader 106 and the rate limiter 108), or increase an abruptness of an imposition of an authority limit. Accordingly, some margin may be provided with regard to the transition between the first operational envelope 206 and the second operational envelope 208. For example, a temporal margin 216 can be provided. The figures are not necessarily provided to scale, and the temporal margin 216 can extend a lesser distance in some embodiments (e.g., less than one second, on some embodiments). A restricted operational envelope 218 can represent spatial areas of the present graph which would exceed design limits for an aerial vehicle. A restricted operational envelope 218 is likewise present in FIGS 3-4, although a reference indicator for the restricted operational envelope 218 is omitted from FIGS 3-4 to improve clarity of the figures.

Referring to FIG. 3, another example of continuous and transient limits for an aerial vehicle is provided in accordance with one or more implementations. More particularly, the present limits are provided for turbine gas temperature (TGT) for an aerial vehicle (e.g., helicopter). As described above, the aspects of the present figure can apply to various further parameters of aerial vehicles. The TGT is provided with reference to a continuous engine limit 302 of 100% (which may be provided as about 700°C-800°C, for some vehicles). Multiple transient engine limits 122 are provided, including a first transient limit 304 corresponding to 115% of the nominal maximum and a second transient limit 306 corresponding to 110% of the nominal maximum. Additional or fewer transient limits can be provided according to various implementations or for various parameters of the aerial vehicle.

A first operational envelope 308 corresponds to the continuous limit 302, such that operation in the first operational envelope 308 is not time limited. A second operational envelope 310 corresponds to the first transient limit 304, such that operation in the second operational envelope 310 is time limited to within a corresponding duration, depicted as terminating at or prior to a first time 314. A third operational envelope 312 corresponds to the second transient limit 306, such that operation in the third operational envelope 312 is time limited to within a corresponding duration, depicted as terminating at or prior to a second time 316. The first time 314 and the second time 316 can vary widely from one another, or from the depicted graph. For example, the first time 314 can be provided as a few or several seconds and second time 316 can be provided as a few or several minutes (or hours). A first temporal margin 318 and second temporal margin 320 are provided, as corresponding to a first non-operating envelope 322 and a second non-operating envelope 324.

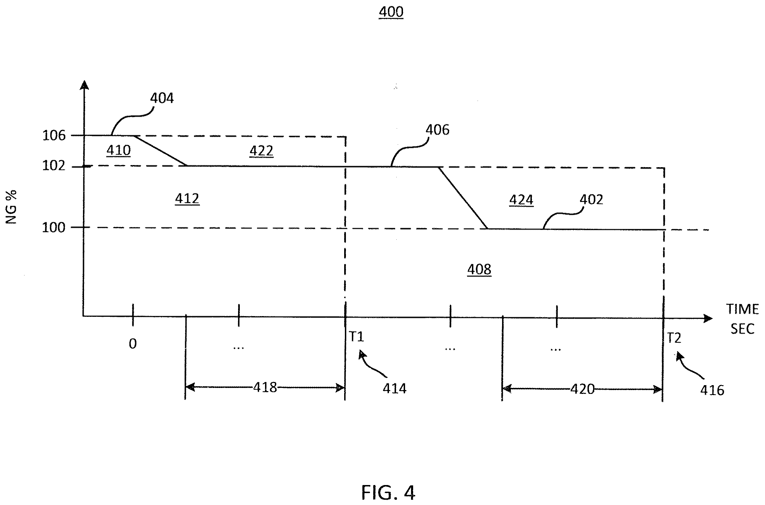

Referring to FIG. 4, further continuous and transient limits for an aerial vehicle are provided in accordance with one or more implementations. More particularly, the present limits are provided for turbine gas generator speed (NG). A continuous limit 402 is provided at 100% of a nominal, though such a value can include additional margin or offset (e.g., to 99%) to allow for recovery from excursions above the continuous limit 402. A first transient limit 404 corresponds to 106% of the nominal maximum and a second transient limit 406 corresponds to 102% of the nominal maximum. A first operational envelope 408 corresponds to the continuous limit 402, such that operation in the first operational envelope 408 is not time limited. A second operational envelope 410 corresponds to the first transient limit 404, terminating at or prior to a first time 414. A third operational envelope 412 corresponds to the second transient limit 406, terminating at or prior to a second time 416. A first temporal margin 418 and second temporal margin 420 are provided, as corresponding to a first non-operating envelope 422 and a second non-operating envelope 424.

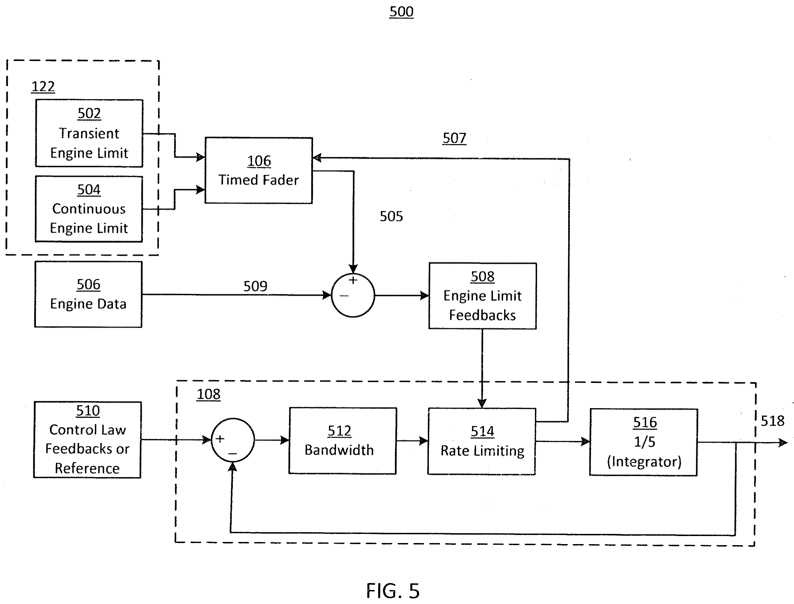

Referring to FIG. 5, a block diagram of a control system 500 to implement continuous and transient limits is provided in accordance with one or more implementations. The data processing system 100 can include processing circuitry to instantiate various implementations of the control system 500, for various parameters, operating modes, or so forth.

The control system 500 can control a single engine (e.g., of a single-engine aerial vehicle) or multiple engines of a multi-engine aerial vehicle. The multi-engine aerial vehicle can be configured to operate in, for example, an AEO (all engines operable) or OEI (one engine inoperable mode of operation. Based on such modes of operation, the control system 500 can adjust an engine limit 122. In a multi-engine aerial vehicle, the engine limits 122 can refer to averages between the engines or maximums for each engine. Where one or more engines of a multi-engine aerial vehicle are inoperable, the control system 500 can adjust an engine limit 122 based on the quantity of operating engines. For example, an average engine limit 122 for a dual engine aircraft can include margin for engine-to-engine variance. When operating in a single engine mode of operation, the engine limit 122 can be increased (e.g., to absorb the margin). In some cases, an engine limit for an aerial vehicle maneuvering with an inoperable engine can include further increased engine limits 122, to aid the operation of the reduced-function aerial vehicle.

Various engine limits 122, such as a transient engine limit 502 and a continuous engine limit 504 are received by the limit fader 106. A time limit is received for any transient engine limits 502. For example, a time limit of ten seconds can be provided for the transient engine limit 502. The limit fader 106 can generate an output limit 505 based on the value of the transient engine limit 502, the time of the transient engine limit 502, and the continuous engine limit 504. For example, the initial value can be equal to the transient engine limit 502, and can be maintained at the transient engine limit 502 until approaching the expiration of the time of the transient engine limit 502 (e.g., such that a rate limited output will be able to reach the continuous engine limit 504 at, or prior to, the expiration of the time of the transient engine limit 502). Accordingly, an output limit 505 of the limit fader 106 can begin at a transient engine limit 502 and, as the time limit approaches its expiration, decrease towards the continuous engine limit 504. The output limit 505 of the limit fader 106 can further depend upon an on-limit indication 507 received from a rate-limiting component 514. For example, the limit fader 106 can inhibit changes to an output based on a receipt of the on-limit indication 507 to avoid providing sudden changes to the performance envelope of the aerial vehicle.

The control system 500 can determine a difference between the output limit 505 of the limit fader 106 and engine data 506, as may include a current operating state 509 of the engine (e.g., shaft output torque, turbine gas generator temperature, or gas generator speed). Such a difference can represent an available margin at the time, and be referred to as engine limit feedback 508, as provided to the rate limiter 108 (and more particularly, a rate-limiting component 514 thereof). The engine limit feedback 508 can be provided to an autonomy system 104 or human pilot, as may modulate control inputs based upon its receipt. The engine limit feedback 508 can further be used to modulate various controls of the engine or other aircraft controls (e.g., flap deployments of fixed wing aircraft).

The rate limiter 108 can receive a reference value 510 of a commanded operating state, as may be received from a pilot, an autonomy system 104, or a combination thereof (e.g., according to various control laws implemented to maintain flight envelope parameters). The reference value 510 can be compared to a present target operating state 518, such as by determining a difference therebetween. A bandwidth-control component 512 (e.g., instantiated function or dedicated circuit) can generate a transformed output. For example, a low pass filter can generate an output slewing the input of the difference between the reference value 510 and the target operating state 518. Such a transform can suppress high frequency noise which may not be indicative of an intended control input (e.g., sensor noise or pilot hand tremors in a flight control system).

The transformed (e.g., slewed) output of the bandwidth-control component 512 can be forwarded to a rate-limiting component 514, as may rate-limit changes to the target operating state 518, to avoid abrupt changes to engine limits 122, which may be challenging for a pilot, such as a human pilot or an autonomy system 104, to manage. A rate limit of the rate-limiting component 514 can be selected in combination with a fading rate of the limit fader 106 to avoid operation beyond an operational envelope (e.g., to the right of an operational envelope, as depicted in FIGS 2-4). For example, a limit fader 106 which begins fading relatively late in an operational envelope may be paired with a rate-limiting component 514 which implements a relatively steep transition via a relatively high rate of change, while a rate-limiting component 514 configured to provide a relatively shallow transition may be paired with a limit fader 106 that begins somewhat earlier, to avoid overshooting into a restricted operational envelope.

The rate-limiting component 514 can locally limit the rate, or output an on-limit indication 507 to the limit fader 106 to inhibit further changes, to achieve the rate limit. Such an approach can synchronize the operation of the limit fader 106 and the rate-limiting component 514 and avoid drift therebetween. Some implementations can use the rate-limiting component 514 as the bandwidth-control component 512, or use a low pass filter to apply a rate limit (according to a slew limit of the low pass filter). That is, some implementations can omit one of the separate components of the bandwidth-control component 512 or the rate-limiting component 514. Such an approach may reduce computational load, but may amplify high frequency noise (where a bandwidth-control component 512 is omitted) or pass through relatively steep transitions (where another rate-limiting component 514 is omitted).

The output of the rate-limiting component 514 can be conditioned prior to output. For example, a response shaping component (e.g., integrator) can apply a response shaping function, such as an integration to integrate the output over time to mitigate steady state error signals and smooth an output. For example, the response shaping component can operate in a Laplace domain to determine the integral, and invert the transform output a time-domain target operating state 518. The data processing system 100 can use the target operating state 518 to generate control signals to operate at least one component of the aerial vehicle at the target operating state (e.g., a turboshaft engine coupled with an airfoil).

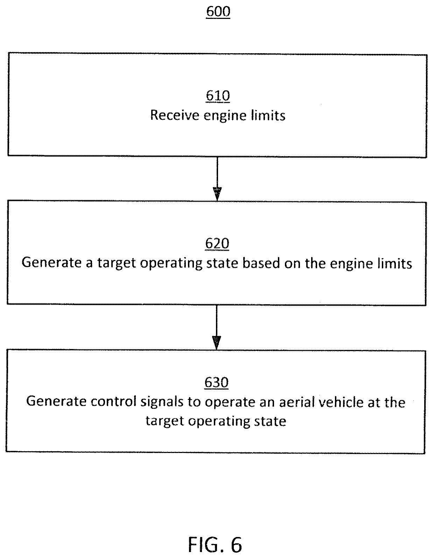

Referring to FIG. 6, a block diagram for a method 600 of operating an aerial vehicle in excess of a continuous limit is provided in accordance with one or more implementations. The method 600 can be executed, performed, or otherwise carried out by the data processing system 100 including, for example, the computer system 800 described herein in conjunction with FIG. 8, or any other computing devices described herein. In brief overview, the method 600 can include receiving at least two engine limits (ACT 610), generating a target operating state based on the at least two engine limits, (ACT 620), and generating control signals to operate an aerial vehicle at the target operating state (ACT 630).

In further detail, at least one controller of the data processing system 100 can receive at least two engine limits 122 for an aerial vehicle (ACT 610). For example, the data processing system 100 can receive at least one transient engine limit 122 being associated with a (first) limited temporal duration, and another engine limit such as a continuous engine limit 122, or a second transient engine limit 122 associated with a limited temporal duration extending beyond the first limited temporal duration. The engine limits 122 can be received from a local storage device or lookup table, according to one or more modes of operation, are can be received from another controller (e.g., a ship- or ground-based control system).

In some implementations, the method 600 can include receiving additional engine limits, such as at least one additional transient engine limit 122 having a different duration, or engine limits for further parameters. The engine limits 122 can refer to or include at least one of (*i*) a shaft output torque, (*ii*) turbine gas generator temperature (TGT), or (*iii*) a gas generator speed (NG) for a turboshaft engine of the aerial vehicle (e.g., a helicopter). The method 600 can be performed simultaneously for various parameters, though any target output intended to reduce one engine parameter towards nominal can impact further components. For example, a reduction to TGT accomplished via a reduction in throttle can result in higher or lower shaft output torque, according to a state of the aerial vehicle (e.g., attitude, acceleration, and control input position).

Various references to a continuous engine limit 122 provided herein can be substituted for another transient engine limit 122 associated with a longer duration. The data processing system 100 can select between the various engine limits 122 having different durations based on a time elapsed since exceeding the continuous engine limit 122, such that ACTS 620 and 630 are performed with regard to the selected engine limits 122. More particularly, the data processing system 100 can select a transient engine limit 122 having a shortest non-expired duration, and another engine transient engine limit 122 which has a next-shortest non-expired duration (or a continuous engine limit 122 where no such transient engine limit 122 is available). For ease of distinguishing between engine limits, the selected engine limits 122 will be referred to as a continuous engine limit 122 and a transient engine limit 122 at ACTS 620 and 630.

The data processing system 100 (e.g., the at least one controller) can generate a target operating state 518 based on the at least two engine limits (ACT 620). For example, the target operating state 518 can be generated as a value greater than the continuous engine limit 122 and less than the transient engine limit 122. The data processing system 100 can generate the target operating state 518 according to an operation of at least one limit fader 106 or rate limiter 108 (e.g., a limit fader 106 separate from and coupled with the rate limiter 108). The target operating state 518 being greater than the continuous engine limit 122 can aid an aerial vehicle to perform maneuvers which would exceed the continuous engine limit 122 without exceeding a duration of an applicable transient engine limit 122. For example, the aerial vehicle can be coupled with a slung load and a time for the transient engine limit 122 can exceed a positive dynamic load for a flight maneuver of the aerial vehicle, such that an excess load applied to the aerial vehicle (e.g., according to a pendulation of the slung load) can be "ridden through" without receiving a performance envelope. For more persistent loads, which exceed a duration for the transient engine limit 122, the aerial vehicle can adopt a reduced performance envelope (e.g., the continuous engine limits 122) to avoid exceeding design parameters of the engine, airframe, or other components of the aerial vehicle.

The data processing system 100 (e.g., the at least one controller) can generate control signals to operate an aerial vehicle at the target operating state. (ACT 630). For example, the control signals can include signals provided to various components of the aerial vehicle. Such components can include, but are not limited to actuators, such as actuators for a swashplate assembly (e.g., cyclic or collective actuators), rotor blade pitch, tail rotor yaw, throttle plate or fuel control unit, torque limiter, and so forth.

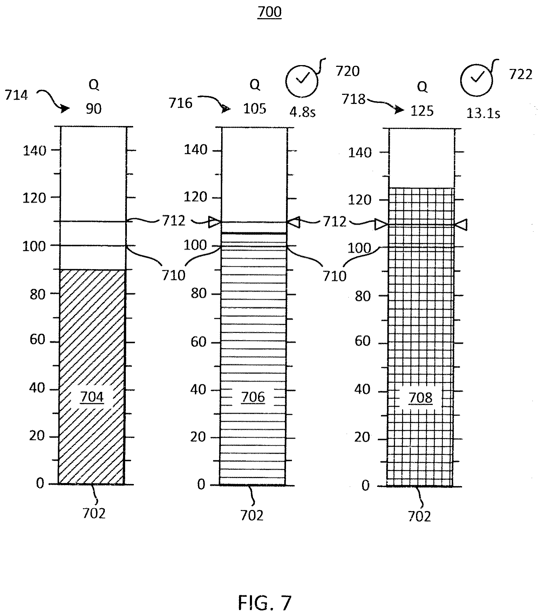

Referring to FIG. 7, a graphical user interface (GUI) 700 to indicate dynamic margin available for a limit of an aerial vehicle is provided in accordance with one or more implementations. The GUI 700 can be generated and presented by the data processing system 100 to correspond with various operational states. For example, the GUI 700 can be provided to indicate constraints imposed onto pilot inputs according to an operation of an autonomy system 104, or can be provided to a pilot as a cockpit display to aid the pilot to maneuver an aerial vehicle, without imposing constraints on pilot inputs (e.g., the pilot may be permitted to exceed design parameters of the engine, airframe, or other components of the aerial vehicle).

Various instances of a vertical scale indicator 702 are provided. The depicted vertical scale indicators 702 can be substituted for further indicators such as round dials, numeric readouts, or radial indicators in some implementations. The various instances can correspond to different parameters of an aerial vehicle, or the same parameter of an aerial vehicle over time. For example, the vertical scale indicators 702 can correspond to a value of a (*i*) shaft output torque, (*ii*) turbine gas generator temperature (TGT), or (*iii*) a gas generator speed (NG), among others. The vertical scale indicators 702 can include an indication of a current or commanded operating state, provided as referenced to a continuous engine limit 122 normalized to one hundred (e.g., 100%, or 100 arbitrary units). More particularly, a first 704, second 706, and third 708 example of a current or commanded operating state are provided. The vertical scale indicators 702 include an indication of engine limits 122, such as a continuous engine limit indicator 710 and at least one transient engine limit indicator 712, greater than the continuous engine limit indicator 710.

The first current or commanded operating state 704 is provided as ninety, a numeric readout 714 is provided as duplicative to the vertical scale indicator 702. Ninety is less than the continuous engine limit indicator 710 (and thus also less than the transient engine limit indicator 712). Under such conditions, a target operating state 518 can match the commanded operating state 704. For example, the limit fader 106 and rate limiter 108 may be bypassed or operate in a pass-through mode. In some implementations, a size, color, brightness, or other prominence of the vertical scale indicator 702 can indicate nominal operation (e.g., the bar can be colored green).

The second current or commanded operating state 706 is provided as one-hundred and five, another numeric readout 716 is provided as duplicative to the vertical scale indicator 702. Such a value exceeds the continuous engine limit 122, but not the transient engine limit 122. Under such conditions, a target operating state 518 can match the commanded operating state 704 for a limited duration before the limit fader 106 reduces an output towards the continuous engine limit 122. An indication of a remaining time 720 is provided to indicate a time remaining. For example, the indication of a remaining time 720 can indicate a time remaining before the limit fader 106 begins to limit the output or a time remaining before the limit fader 106 limits the output to the continuous engine limit 122 (as limited by the rate limiter 108). In some implementations, a size, color, brightness, or other prominence of the vertical scale indicator 702 can indicate operation as offnominal but within design limits, by exceeding the continuous limit but not exceeding an applicable transient engine limit 122 (e.g., the bar can be colored yellow). Further, the transient engine limit indicator 712 can be provided with a level of prominence to indicate that the transient engine limit 122 is active, (e.g., the transient engine limit indicator 712 may be colored differently, than the first current or commanded operating state 704 because the current or commanded operating state 706 exceeds a continuous engine limit 122).

The third current or commanded operating state 708 is provided as one-hundred twentyfive. Another numeric readout 718 is provided as duplicative to the vertical scale indicator 702. Such a value exceeds the continuous engine limit 122 as well as the transient engine limit 122. In some cases, the third current or commanded operating state 708 is a commanded operating state which differs from a current operating state. For example, the GUI can indicate a commanded operating state which exceeds the current operating state, which may be limited to the transient engine limit 122. According to such an implementation, the depicted timer 722 can indicate a remaining duration, similarly to the previous remaining time 720.

Conversely, in some cases, such as where the pilot is permitted to exceed design parameters for the aerial vehicle, the third current or commanded operating state 708 is a current operating state which does not differ from a commanded operating state. According to such an implementation, the depicted timer 722 can indicate a duration for which the transient engine limit 122 has been exceeded, or a duration for which the continuous engine limit 122 has been exceeded. Where the transient engine limit 122 is exceeded or the continuous engine limit 122 is exceeded for a duration exceeding a corresponding duration, the timer 722 can be provided with increased prominence, relative to the remaining time 720. For example, the timer 722 can be provided as red, bolded, flashing, or accompanied by an audible or visual alarm.

FIG. 8 illustrates a block diagram of an example computer system 800 useful in implementing one or more components detailed herein. The computer system or computing device 800 can include or be used to implement the data processing system 100, or its components. The computing system 800 includes at least one bus 805 or other communication component for communicating information and at least one processor 810 or processing circuit coupled to the bus 805 for processing information. The computing system 800 can also include one or more processors 810 or processing circuits coupled to the bus 805 for processing information. The computing system 800 also includes at least one main memory 815, such as a random-access memory (RAM) or other dynamic storage device, coupled to the bus 805 for storing information, and instructions to be executed by the processor 810. The computing system 800 can further include at least one read only memory (ROM) 820 or other static storage device coupled to the bus 805 for storing static information and instructions for the processor 810. A storage device 825, such as a solid-state device, magnetic disk, or optical disk, can be coupled to the bus 805 to persistently store information and instructions.

The computing system 800 can be coupled via the bus 805 to a display 835, such as a liquid crystal display, or active-matrix display, for displaying information to a user such as an administrator of the data processing system 100. An input device 830, such as a keyboard or voice interface can be coupled to the bus 805 for communicating information and commands to the processor 810. The input device 830 can include a touch screen display 835. The input device 830 can also include a cursor control, such as a mouse, a trackball, or cursor direction keys, for communicating direction information and command selections to the processor 810 and for controlling cursor movement on the display 835. The display 835 can be part of the display devices 835, or other components of FIG. 8.

The processes, systems, and methods described herein can be implemented by the computing system 800 in response to the processor 810 executing an arrangement of instructions contained in main memory 815. Such instructions can be read into main memory 815 from another computer-readable medium, such as the storage device 825. Execution of the arrangement of instructions contained in main memory 815 causes the computing system 800 to perform the illustrative processes described herein. One or more processors in a multi-processing arrangement can also be employed to execute the instructions contained in main memory 815. Hard-wired circuitry can be used in place of or in combination with software instructions together with the systems and methods described herein. Systems and methods described herein are not limited to any specific combination of hardware circuitry and software.

Although an example computing system has been described in FIG. 8, the subject matter including the operations described in this specification can be implemented in other types of digital electronic circuitry, or in computer software, firmware, or hardware, including the structures disclosed in this specification and their structural equivalents, or in combinations of one or more of them.

Some of the description herein emphasizes the structural independence of the aspects of the system components and illustrates one grouping of operations and responsibilities of these system components. Other groupings that execute similar overall operations are understood to be within the scope of the present application. Modules can be implemented in hardware or as computer instructions on a non-transient computer readable storage medium, and modules can be distributed across various hardware- or computer-based components.

The systems described above can provide multiple ones of any or each of those components, and these components can be provided on either a standalone system or on multiple instantiations in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

Example and non-limiting module implementation elements include sensors providing any value determined herein, sensors providing any value that is a precursor to a value determined herein, datalink or network hardware including communication chips, oscillating crystals, communication links, cables, twisted pair wiring, coaxial wiring, shielded wiring, transmitters, receivers, or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), or digital control elements.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device," "component," or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array), a GPU, or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services and/or distributed computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array), a GPU, or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements, and features discussed in connection with one implementation are not intended to be excluded from a similar role in other implementations or implementations.

The phraseology and terminology used herein is for the purpose of description and should not be regarded as limiting. The use of "including," "comprising," "having," "containing," "involving," "characterized by," "characterized in that," and variations thereof herein is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

References to "or" can be construed as inclusive so that any terms described using "or" can indicate any of a single, more than one, and all of the described terms. For example, a reference to "at least one of 'A' and 'B'" can include only "A," only "B," as well as both "A" and "B." Such references used in conjunction with "comprising" or other open terminology can include additional items.

Where technical features in the drawings, detailed description or any claims are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as variations in sizes, dimensions, structures, shapes and proportions of the various elements, values of parameters, mounting arrangements, use of materials, colors, and orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

The systems and methods described herein can be embodied in other specific forms without departing from the characteristics thereof. Scope of the systems and methods described herein is thus indicated by the appended claims, rather than the foregoing description, and changes that come within the meaning and range of equivalency of the claims are embraced therein.

While this specification contains many specific implementation details, these should not be construed as limitations on the scope of any inventions or of what can be claimed, but rather as descriptions of features specific to particular embodiments of particular aspects. Certain features described in this specification in the context of separate embodiments can also be implemented in combination in a single embodiment. Conversely, various features described in the context of a single embodiment can also be implemented in multiple embodiments separately or in any suitable sub combination. Moreover, although features can be described above as acting in certain combinations and even initially claimed as such, one or more features from a claimed combination can in some cases be excised from the combination, and the claimed combination can be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the embodiments described above should not be understood as requiring such separation in all embodiments, and it should be understood that the described program components and systems can generally be integrated in a single software product or packaged into multiple software products.

Thus, particular embodiments of the subject matter have been described. In some cases, the actions recited in the claims can be performed in a different order and still achieve desirable results. In addition, the processes depicted in the accompanying figures do not necessarily require the particular order shown, or sequential order, to achieve desirable results.

## Claims

1. An aerial vehicle, comprising:
an engine; and
a controller configured to:
receive a continuous engine limit for the engine;
receive a transient engine limit for the engine;
generate, using the continuous engine limit and the transient engine limit, a target operating state greater than the continuous engine limit and less than the transient engine limit; and
generate control signals to operate the engine at the target operating state.

2. The aerial vehicle of claim 1, wherein the engine is a turboshaft engine and the continuous engine limit comprises a limit for:
shaft output torque;
a turbine gas generator temperature (TGT); and
a gas generator speed (NG).

3. The aerial vehicle of claim 1 or 2, wherein the controller is configured to:
receive an additional transient engine limit having a different transient duration than the transient engine limit; and
select one of the transient engine limit or the additional transient engine limit based on a time elapsed since exceeding the continuous engine limit, wherein the control signals are generated based on the selected one of the transient engine limit or the additional transient engine limit.

4. The aerial vehicle of one of claims 1 to 3, wherein the controller is configured to:
rate-limit an adjustment to the target operating state based on a remaining time associated with the transient engine limit.

5. The aerial vehicle of one of claims 1 to 4, wherein the controller is configured to:
receive a commanded operating state exceeding the target operating state, wherein the control signals to operate the engine are generated responsive to the receipt of the commanded operating state, particularly wherein the commanded operating state is received from an autonomous flight control system of the aerial vehicle and/or the controller is configured to present, via a cockpit display:
the commanded operating state relative to the target operating state and the continuous engine limit, wherein the commanded operating state exceeds the target operating state.

6. The aerial vehicle of one of claims 1 to 5, wherein the controller is configured to present, via a cockpit display:
an indication of a current operating state relative to the continuous engine limit and the transient engine limit; and
an indication of a remaining time for the transient engine limit,
particularly wherein the controller is configured to present the indication of the current operating state with increased prominence responsive to the current operating state exceeding the continuous engine limit.

7. A method comprising:
receiving, by a controller, a continuous engine limit for an aerial vehicle;
receiving, by the controller, a transient engine limit for the aerial vehicle;
generating, by the controller using the continuous engine limit and the transient engine limit, a target operating state greater than the continuous engine limit and less than the transient engine limit; and
generating, by the controller, control signals to operate the aerial vehicle at the target operating state.

8. The method of claim 7, wherein the continuous engine limit comprises a shaft output torque for a turboshaft engine of the aerial vehicle, particularly wherein the continuous engine limit comprises a limit for:
a turbine gas generator temperature (TGT); and
a gas generator speed (NG).

9. The method of claim 7 or 8, wherein:
a time for the transient engine limit exceeds a positive dynamic load for a flight maneuver of the aerial vehicle.

10. The method of one of claims 7 to 9, further comprising:
receiving, by the controller, an additional transient engine limit having a different transient duration than the transient engine limit; and
selecting, by the controller, one of the transient engine limit or the additional transient engine limit based on a time elapsed since exceeding the continuous engine limit, wherein the control signals are generated based on the selected one of the transient engine limit or the additional transient engine limit.

11. The method of one of claims 7 to 10, further comprising:
rate-limiting, by the controller, an adjustment to the target operating state based on a remaining time associated with the transient engine limit.

12. The method of one of claims 7 to 11, further comprising:
receiving, by the controller, a commanded operating state exceeding the target operating state, wherein the control signals are generated responsive to the receipt of the commanded operating state; and
presenting, by the controller via a cockpit display, the commanded operating state relative to the target operating state and the continuous engine limit, wherein the commanded operating state exceeds the target operating state.

13. A non-transitory computer readable media comprising instructions stored thereon that, when executed by a controller, causes the controller to perform the method according to one of claims 7 to 12.

14. The computer readable media of claim 13, wherein the continuous engine limit and the transient engine limit comprise a plurality of components, the plurality of components comprising:
shaft output torque for the engine, wherein the engine is a turboshaft engine;
a turbine gas generator temperature for the turboshaft engine; and
a gas generator speed (NG) for the turboshaft engine.

15. The computer readable media of claim 13 or 14, wherein the instructions comprise instructions to present, via a cockpit display:
a commanded operating state relative to the target operating state and the continuous engine limit, wherein the commanded operating state exceeds the target operating state;
an indication of a current operating state relative to the continuous engine limit and the transient engine limit; and
an indication of a remaining time for the transient engine limit.
